# EUROPÄISCHE PATENTSCHRIFT

(11) **EP 1 983 207 B1**
(45) Veröffentlichungstag und Bekanntmachung des Hinweises auf die Patenterteilung: **20.06.2012**
(21) Anmeldenummer: 08006769.7
(22) Anmeldetag: 03.04.2008
(51) Int. Cl.: F16D 13/68, F16D 13/58

(54) **Mitnehmereinheit für eine Kupplungsanordnung, insbesondere eine nasslaufende Doppelkupplungsanordnung**
Drive unit for a clutch device, in particular a wet-running double clutch
Unité d'entraînement pour un agencement d'embrayage, en particulier pour agencement de double embrayage humide

(30) Priorität: 16.04.2007 US 923812 P
(43) Veröffentlichungstag der Anmeldung: 22.10.2008
(73) Patentinhaber: Schaeffler Technologies AG & Co. KG, 91074 Herzogenaurach (DE)
(72) Erfinder: Ari, Vural, 44691 Wooster, OH (US)

(56) Entgegenhaltungen:
- EP-A1- 1 643 144
- DE-A1-102005 025 979
- US-B2- 6 883 656

## Beschreibung

Die Erfindung betrifft eine Mitnehmerbaueinheit für eine Kupplungsanordnung, insbesondere eine nasslaufende Doppelkupplungsanordnung, mit einem Kupplungsgehäuse und einem Deckel, die unter Umschließung eines Innenraumes zur Aufnahme der Kupplungsanordnung miteinander verbunden sind.

Eine Mitnehmerbaueinheit für ein Mehrscheibenkupplungssystem ist aus der Druckschrift US 6,883,656 B2 vorbekannt. Die Mitnehmerbaueinheit umfasst ein Kupplungsgehäuse und einen Deckel, die drehfest miteinander koppelbar sind. Die Kopplung erfolgt unter Ausbildung eines Innenraumes zur Aufnahme der Kupplungsanordnung. Kupplungsgehäuse und Kupplungsdeckel sind koaxial zueinander angeordnet und weisen eine gemeinsame Rotationsachse auf. Die drehfeste Verbindung erfolgt über zueinander komplementäre Verzahnungen, die in radialer Richtung miteinander in Eingriff stehen. Während des Betriebes erweitert sich jedoch mit Zunahme der Drehzahl der Mitnehmerbaueinheit der Deckel im Wesentlichen in radialer Richtung in Bezug auf das Kupplungsgehäuse. Im Ergebnis führt dies bei hohen Drehzahlen zum Spiel zwischen der Innen- und Außenverzahnung, das sich mit zunehmender Drehzahl weiter vergrößert. Dies führt zu einem störenden Rasselgeräusch. Zur Vermeidung derartiger Geräusche ist es bekannt, das Kupplungsgehäuse mit einer Mehrzahl von inneren Verzahnungen zu versehen, die geeignet sind, in kämmendem Eingriff mit einer Mehrzahl von äußeren Zähnen elastisch unter Eigenspannung eingebracht zu werden. Diese Lösung führt zu einer Elimination der Geräusche, setzt jedoch eine hohe Fertigungsgenauigkeit voraus, da insbesondere auch die Sicherung in axialer Richtung über miteinander in Eingriff stehende Verzahnungen vorgenommen wird und daher auch die einzelnen Verzahnungsflächen entsprechend der dabei auftretenden Belastungen auszulegen sind, um die nötigen Flächendrücke zu erzeugen.

Aus der Druckschrift EP 1 643 144, der den nächstliegenden Stand der Technik darstellt, ist weiterhin eine Mitnehmereinheit bekannt, wobei der Deckel am Kupplungsgehäuse über einen Verbindungsring gesichert ist.

Der Erfindung liegt daher die Aufgabe zugrunde, eine Mitnehmerbaueinheit für eine Kupplungsanordnung, insbesondere für nasslaufende Doppelkupplungen der eingangs genannten Art derart weiterzuentwickeln, dass diese hinsichtlich der Fertigungsgenauigkeit geringeren Anforderungen unterworfen ist, eine starke Geräuschdämpfung, insbesondere im Leerlauf vorhanden ist, und ferner leicht zu montieren und demontieren ist.

Die erfindungsgemäße Lösung ist durch die Merkmale des Anspruchs 1 charakterisiert ist. Vorteilhafte Ausgestaltungen sind in den Unteransprüchen beschrieben.

Eine Mitnehmerbaueinheit für eine Kupplungsanordnung, insbesondere eine nasslaufende Doppelkupplungsanordnung, umfasst ein Kupplungsgehäuse und einen Deckel, die unter Umschließung eines die Kupplungsanordnung aufnehmenden Innenraumes miteinander gekoppelt sind. Erfindungsgemäß erfolgt die Kopplung zwischen dem Deckel und dem Kupplungsgehäuse drehfest und wird über einen Verbindungsring gesichert. Diese Lösung ermöglicht es zum einen, die Fixierung in axialer und in Umfangsrichtung allein über den Verbindungsring zu realisieren sowie ferner, je nach Ausführung, eine frei von Vorspannungen der einzelnen Elemente realisierbare Mitnehmerbaueinheit zu schaffen, die leicht montierbar und auch demontierbar ist und trotzdem im Hinblick auf die Geräuschentwicklung, insbesondere im Leerlaufbetrieb, geräuscharm ist.

Die drehfeste Verbindung zwischen dem Deckel und dem Kupplungsgehäuse erfolgt vorzugsweise in axialer Richtung vollständig spielfrei, so dass hier auch im Fall, dass die Kupplung nicht betätigt ist und damit keine Abstützung gegenüber dem Deckel beziehungsweise der Gehäusewandung eintritt, kein Spiel zwischen den Elementen vorliegt.

Erfindungsgemäß erfolgt die drehfeste Verbindung in Umfangsrichtung mit begrenzter Verdrehbarkeit zwischen Deckel und Kupplungsgehäuse, über ein elastisches Dämpfungsglied und mit einer Drehmomentbegrenzung, so dass in gewissem Maße eine Relativbewegung in Umfangsrichtung zugelassen wird, die jedoch durch einen festen Anschlag begrenzt wird. Mit dieser Lösung ist es möglich, Schwingungen auch zu dämpfen, insbesondere im Leerlaufbetrieb, was zu einer erheblichen Reduzierung der Geräuschentwicklung beiträgt.

Vorzugsweise wird der Verbindungsring mit den Anschlusselementen - Gehäuse und Deckel - über eine Bajonettverbindung in axialer Richtung fixiert, wobei diese Bajonettverbindung zwischen Kupplungsgehäuse, Deckel und Verbindungsring in axialer Richtung ausgebildet wird und dieser Formschluss über eine Schnappverbindung in Umfangsrichtung fixiert beziehungsweise gesichert wird. Diese Schnappverbindung ermöglicht eine leichte Montage und Demontage der gesamten Einheit, indem der Verbindungsring entfernt wird. Bezüglich der konkreten Ausführungen werden unterschiedliche Varianten unterschieden. Bei diesen sind jedoch zwischen dem Deckel und dem Gehäuse Mittel zur Realisierung eines Formschlusses in axialer Richtung oder Umfangsrichtung vorgesehen, der über den Verbindungsring über Mittel zur Realisierung einer Schnappverbindung und einen Formschluss zwischen Deckel und Gehäuse und Verbindungsring in axialer Richtung, vorzugsweise in Form einer Bajonettverbindung gesichert wird. Die einzelnen Möglichkeiten können beliebig ausgeführt sein, sind jedoch hinsichtlich der Funktion bei der Montage hinsichtlich ihrer Abmessungen aufeinander abzustimmen.

Gemäß der ersten Ausführungsform weist das Kupplungsgehäuse Mitnahmeelemente auf, die in Umfangsrichtung in gleichmäßigem Abstand zueinander angeordnet sind und mit dazu komplementär ausgeführten Ausnehmungen im Deckel zusammenwirken. Die Ausnehmungen im Deckel erstrecken sich in Umfangsrichtung und sind hinsichtlich ihrer Größe größer als die Erstreckung der Mitnahmeelemente im Endbereich in Umfangsrichtung, jedoch kleiner als der Gesamtabstand zwischen einer in Umfangsrichtung ausgerichteten Seitenfläche zur gleichen in Umfangsrichtung ausgerichteten Seitenfläche des benachbarten Mitnahmeelementes. Durch die unterschiedlichen Endbereiche sind erste Mitnahmeelemente und zweite Mitnahmeelemente ausgebildet. Alle Mitnahmeelemente weisen an einer in gleicher Richtung in Umfangsrichtung ausgerichteten Seitenfläche angeordnete randoffene Aussparungen unter Ausbildung eines in axialer Richtung wirkenden Anschlages für den Deckel auf. Die ersten und die zweiten Mitnahmeelemente unterscheiden sich im Hinblick auf die Ausbildung der jeweils zweiten gegenüberliegenden Seitenfläche. Die ersten Mitnahmeelemente sind durch die Ausbildung einer in Umfangsrichtung weisenden Anschlagfläche für die Aussparung am Deckel charakterisiert, während die zweiten Mitnahmeelemente eine randoffene Aussparung unter Ausbildung wiederum einer axialen Anschlagsfläche für den Deckel aufweisen. Die Breite der randoffenen Aussparung an der ersten Seitenfläche entspricht zumindest der Dicke des Deckels. Die Breite der Aussparung an der zweiten Seitenfläche entspricht zumindest der Dicke des Verbindungsringes. Der Verbindungsring weist in der ersten Ausführungsform in Umfangsrichtung im Bereich des Außenumfanges angeordnete Aussparungen, die in gleichmäßigen Abständen zueinander angeordnet sind und komplementär zu den Aussparungen am Deckel sowie den Mitnahmeelementen ausgeführt sind, auf. Entscheidend ist, dass die Mitnahmeelemente sich durch die Aussparungen auch des Verbindungsringes erstrecken können. Die Größe der Erstreckung in Umfangsrichtung der Aussparungen am Verbindungsring ist kleiner als die Summe des Abstandes von Mitnahmeelement und des Abstandes zum nächsten Mitnahmeelement, jedoch größer als die Erstreckung in Umfangsrichtung eines Mitnahmeelementes. Am Verbindungsring sind unterschiedliche Typen von Aussparungen vorgesehen. Bei einem ersten Typ der Aussparung sind Mittel zur Realisierung einer Schnappverbindung vorgesehen, die in die Aussparung am Deckel zwischen Deckel und Mitnahmeelement des Gehäuses eingreifen. Die zweite Ausführung der Aussparung ist dadurch charakterisiert, dass diese frei von Zusatzelementen ist und lediglich einen Anschlag für die Mitnahmeelemente bildet und somit den Deckel mit dem Kupplungsgehäuse in axialer Richtung verspannt. Die dritte Ausführungsform der Aussparungen ist dadurch charakterisiert, dass diese mit einer Drehmomentbegrenzung versehen ist. Dabei wird die Drehmomentbegrenzung im einfachsten Fall von einem in axialer Richtung ausgerichteten Vorsprung gebildet, der sich ebenfalls in die Aussparung im Deckel erstreckt und eine in Umfangsrichtung ausgebildete Anschlagsfläche bildet, die mit dem Deckel in Wirkverbindung treten kann. Die Anordnung der Mittel zur Realisierung der Schnappverbindung und der Drehmomentbegrenzung an den entsprechenden Aussparungen erfolgt unterschiedlich beabstandet bezogen auf die Lage der der Aussparung am Deckel gegenüber den Mitnahmeelementen, so dass die Anschlagfläche der Drehmomentbegrenzung bei Realisierung der Schnappverbindung beabstandet zur entsprechenden Anschlagsfläche am Deckel angeordnet ist und erst unter erhöhter Belastung im Leerlaufbetrieb unter Aufhebung der Federvorspannung in der Schnappverbindung in der Aussparung des Deckels wirksam wird.

Die Aussparungen am Deckelelement bilden dabei einen Anschlag in Umfangsrichtung. Vorzugsweise sind alle auf einem gemeinsamen Durchmesser angeordnet.

Die erste Ausführung ist durch die Sicherung zweier Bajonettverbindungen, einer ersten in Umfangsrichtung wirkenden Bajonettverbindung zwischen Deckel und Kupplungsgehäuse und einer zweiten in axialer Richtung zwischen Deckel, Kupplungsgehäuse und Verbindungsring erzeugten Bajonettverbindung mittels einer Schnappverbindung in Umfangsrichtung zwischen Deckel und Kupplungsgehäuse und Verbindungsring charakterisiert. Die Mittel zur Realisierung der Schnappverbindung sind dabei integraler Bestandteil des Verbindungsringes und dienen ferner der Dämpfung von Schwingungen zwischen Kupplungsgehäuse und Deckel im Leerlaufbetrieb.

Gemäß einer besonders vorteilhaften Ausführung erstrecken sich die Endbereiche jeweils in axialer Richtung. In diesem Fall ist eine besonders einfache Ausgestaltung möglich. Die Montage und Demontage in axialer Richtung ist wesentlich vereinfacht.

Gemäß einer zweiten Ausführungsform erstrecken sich die Mitnahmeelemente in Analogie zur ersten Ausführungsform in axialer Richtung. Der Deckel weist Ausnehmungen in Umfangsrichtung auf. Dabei sind die Mitnahmeelemente unterschiedlich ausgeführt. Ein erster Typ Mitnahmeelemente ist dadurch charakterisiert, dass diese jeweils an ihren beiden Seitenflächen einen Anschlag in Kombination mit den in Umfangsrichtung ausgerichteten Flächenbereichen der Aussparungen am Deckel bilden und somit quasi einen Formschluss in Umfangsrichtung als auch in radialer Richtung bilden. Die zweiten Mitnahmeelemente sind an der einen Seite durch eine Anschlagsfläche charakterisiert und auf der anderen durch eine Aussparung, in welche in radialer Richtung ausgerichtete Vorsprünge des Verbindungsringes einschiebbar sind, so dass eine Verspannung in axialer Richtung zwischen dem Deckel und dem Kupplungsgehäuse realisiert wird.

Auf einem gleichen Durchmesser oder einem unterschiedlichen Durchmesser sind am Verbindungsring Mittel zur Realisierung einer Schnappverbindung vorgesehen, insbesondere wenigstens ein elastisch federnder Vorsprung, der in einen Schlitz am Deckel eingreifen kann, wobei durch den Eingriff im Schlitz am Deckel die Fixierung in Umfangsrichtung realisiert wird und gleichzeitig wenigstens ein Vorsprung in radialer Richtung am Verbindungsring in eine Position gebracht wird, in der dieser in die Ausnehmung an den zweiten Mitnahmeelementen zum Teil eingreift und dadurch das Kupplungsgehäuse mit dem Deckel verspannt. Bei der zweiten Ausführung sichert die Schnappverbindung den Formschluss in Umfangsrichtung zwischen Deckel und Kupplungsgehäuse und die Bajonettverbindung zur Realisierung eines Formschlusses in axialer Richtung zwischen Kupplungsgehäuse und Deckel.

In beiden Fällen kann über die Schnappverbindung, insbesondere die elastischen Elemente der Schnappverbindung eine Dämpfung von Schwingungen zwischen Kupplungsgehäuse und Deckel erzielt werden.

Die erfindungsgemäße Lösung ist für Kupplungsanordnungen unterschiedlichster Art geeignet. Dabei kann es sich hier um Kupplungsanordnungen mit einer Kupplung handeln oder aber um eine besonders bevorzugte Ausführung in Form von Doppelkupplungen.

Die erfindungsgemäße Lösung wird nachfolgend anhand von Figuren erläutert. Darin ist im Einzelnen folgendes dargestellt:

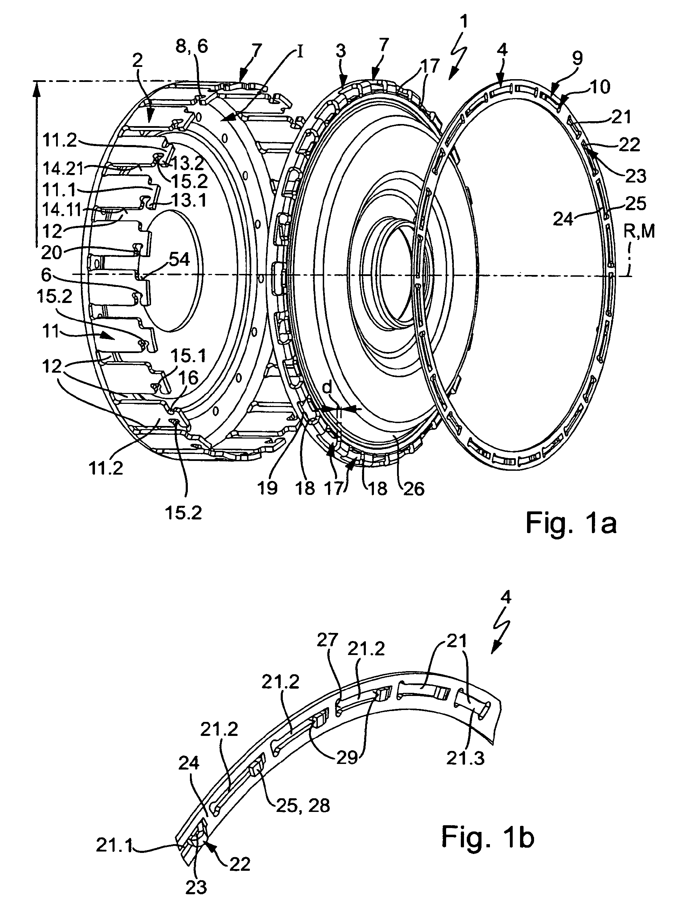

- Figur 1a: verdeutlicht anhand einer Explosionsdarstellung die einzelnen Elemente einer erfindungsgemäßen Mitnehmerbaueinheit;

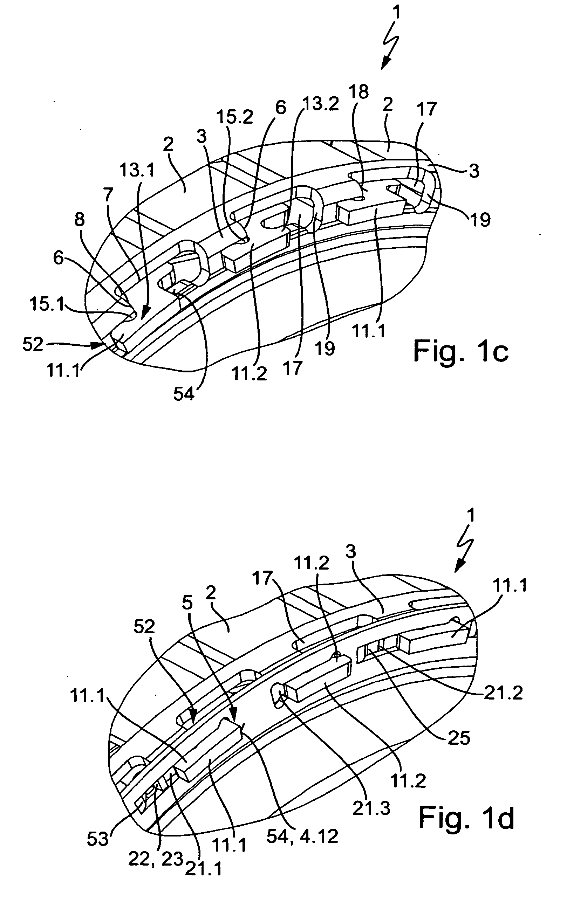

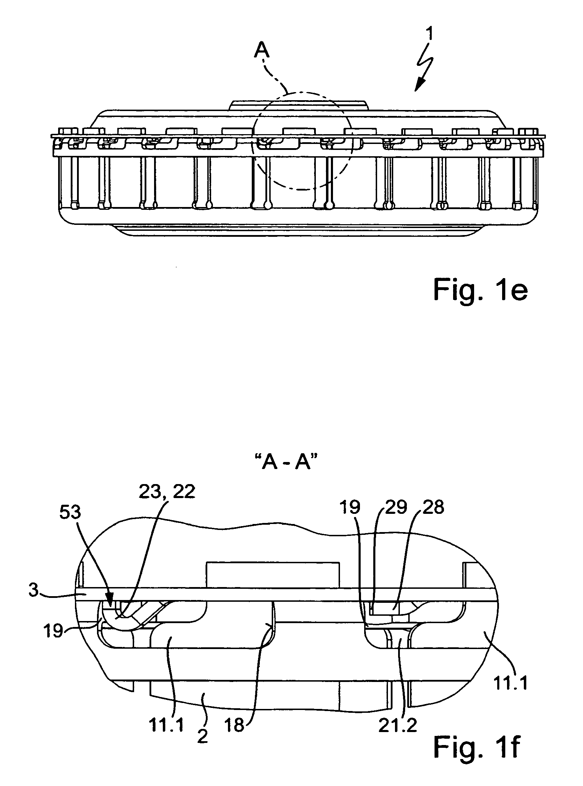

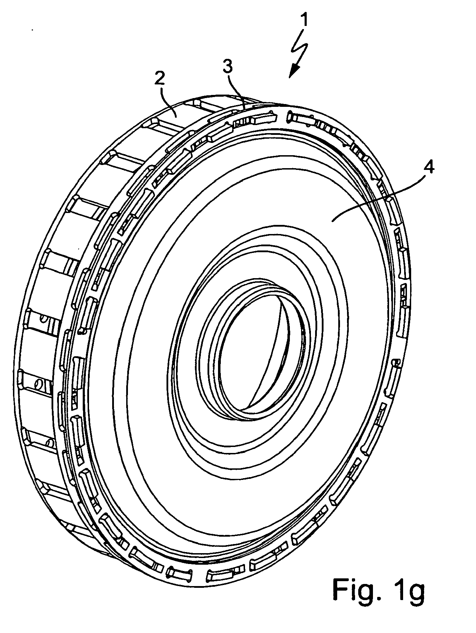

- Figur 1 b: verdeutlicht einen Ausschnitt aus einer Perspektivansicht eines Verbindungsrings;
- Figur 1 c: verdeutlicht anhand eines Ausschnittes aus einer Perspektivansicht den Zustand der Verbindung des Kupplungsgehäuses mit dem Deckel;
- Figur 1d: verdeutlicht anhand einer Perspektivansicht gemäß Figur 1c einen Ausschnitt aus der Mitnehmerbaueinheit nach Montage des Verbindungsringes;
- Figur 1 e: verdeutlicht eine Ansicht von oben auf die montierte Mitnehmerbaueinheit;
- Figur 1 f: verdeutlicht einen vergrößerten Ausschnitt aus einer Ansicht von oben gemäß Figur 1e;
- Figur 1 g: verdeutlicht eine Perspektivansicht einer zusammengebauten Mitnehmerbaueinheit;
- Figur 2a: verdeutlicht anhand einer Explosionsdarstellung eine mögliche zweite Ausführungsform einer erfindungsgemäßen Mitnehmerbaueinheit;
- Figur 2b: verdeutlicht eine Ansicht von oben auf eine Mitnehmerbaueinheit gemäß Figur 2a im montierten Zustand;
- Figur 2c: verdeutlicht einen Ausschnitt aus einer Perspektivansicht einer Mitnehmerbaueinheit gemäß Figur 2a;
- Figur 2d: verdeutlicht die montierte Mitnehmerbaueinheit in Perspektivansicht.

Die Figur 1a verdeutlicht anhand einer Explosionsdarstellung eine Ausführung einer erfindungsgemäß ausgestalteten Mitnehmerbaueinheit 1 für Kupplungsanordnungen, insbesondere nasslaufende Doppelkupplungsanordnungen, gemäß einer ersten Ausführungsform der erfindungsgemäßen Lösung. Die Mitnehmerbaueinheit 1 ist dreiteilig ausgeführt. Diese umfasst ein Kupplungsgehäuse 2, welches auch als Kupplungskäfig bezeichnet wird, und einen Deckel 3, die im montierten Zustand einen Innenraum I zur Aufnahme der Kupplungsanordnung umschließen. Ferner ist ein Verbindungsring 4 vorgesehen, der an der Kopplung zwischen dem Kupplungsgehäuse 2 und dem Deckel 3 beteiligt ist und der Sicherung des Deckels 3 am Kupplungsgehäuse 2 in axialer Richtung und in Umfangsrichtung dient. Gemäß der ersten Ausführungsform der erfindungsgemäßen Lösung sind das Kupplungsgehäuse 2 und der Deckel 3 derart ausgeführt, dass bei Verbindung dieser frei vom Verbindungsring 4 eine Fixierung in axialer Richtung mit Spiel und unter Lastbedingungen, insbesondere bei Abstützung einer druckmittelbetätigten Kolbenanordnung am Deckel 3 frei von Spiel gegeben ist, indem in axialer Richtung ein Formschluss zwischen dem Kupplungsgehäuse 2 und dem Deckel 3 mit Spiel erzeugt wird, und eine Mitnahme des Deckels in Lastrichtung, d.h. bei betätigter Kupplung um die Rotationsachse R, die der Mittenachse M der einzelnen Bauteile Kupplungsgehäuse 2, Deckel 3 und Verbindungsring 4 entspricht, erfolgt, während nach Montage des Verbindungsringes 4 dieser die Sicherung zwischen dem Kupplungsgehäuse 2 und dem Deckel 3 in Umfangsrichtung und in axialer Richtung übernimmt. Die Verbindung zwischen dem Deckel 3 und dem Kupplungsgehäuse 2 im über den Verbindungsring 4 gesicherten Zustand ist drehfest in beide Richtungen, wobei die drehfeste Verbindung in axialer Richtung spielfrei und vorzugsweise auch in Umfangsrichtung spielfrei ist. Der Deckel 3 und das Gehäuse 2 sind dazu formschlüssig durch eine Bajonettverbindung 52 gekoppelt, während der Verbindungsring 4 über eine Bajonettverbindung 5 und einen Schnappmechanismus 53 die Verbindung zwischen Deckel 3 und Gehäuse 2 in Umfangsrichtung sichert und wenigstens mittelbar in axialer Richtung fixiert.

Nach Montage des Deckels 3 am Kupplungsgehäuse 2 sind diese gemäß Figur 1c formschlüssig mit Spiel in axialer Richtung und unter Ausbildung wenigstens eines Anschlages 6 in Umfangsrichtung miteinander verbunden. Der Verbindungsring 4 wird mit dem Deckel 3 formschlüssig in Umfangsrichtung und in axialer Richtung formschlüssig mit dem Kupplungsgehäuse 2 gekoppelt. Die einzelnen Verbindungen werden über entsprechende Mittel an den einzelnen Elementen Deckel 3, Verbindungsring 4 und Kupplungsgehäuse 2 realisiert. Zwischen dem Deckel 3 und dem Kupplungsgehäuse 2 sind Mittel 7 zur Realisierung eines Formschlusses in axialer Richtung mit Spiel vorgesehen. Ferner sind Mittel 8 zur Erzeugung eines Anschlages 6 in einer Richtung in Umfangsrichtung zwischen Deckel 3 und Kupplungsgehäuse 2 vorgesehen. Diese Mittel 7 und 8 dienen der Realisierung der in den Figuren 1c und 1d dargestellten Bajonettverbindung 52. Am Verbindungsring 4 sind ferner Mittel 9 zur Realisierung eines Formschlusses in Umfangsrichtung zwischen dem Verbindungsring 4 und dem Deckel 3 vorgesehen, ferner Mittel 10 zur Realisierung einer axialen Sicherung zwischen Deckel 3 und Kupplungsgehäuse 2. Diese Mittel können unterschiedlich ausgeführt sein. Die Figuren 1a bis 1g verdeutlichen eine besonders vorteilhafte Ausgestaltung. Die einzelnen Bauteile Deckel 3, Kupplungsgehäuse 2 sowie Verbindungsring 4 sind koaxial zueinander angeordnet. Die Richtungsangaben, insbesondere im Hinblick auf die Umfangsrichtung, beziehen sich auf die Rotationsachse R, welche der Mittenachse M dieser Bauteile in Einbaulage entspricht. Das Kupplungsgehäuse 2 ist schalenförmig ausgeführt und umschließt eine mögliche Kupplungsanordnung in radialer und wenigstens teilweise axialer Richtung unter Ausbildung des Innenraumes I. Das Kupplungsgehäuse 2 wird dabei im Wesentlichen von einem scheibenförmigen oder schalenförmigen Element gebildet, an dessen Außenumfang d_{A} in Umfangsrichtung verteilt Mitnahmeelemente 11 angeordnet sind, die in axialer Richtung, das heißt parallel zur Rotationsachse R, und vorzugsweise in Umfangsrichtung mit gleichmäßigem Abstand zueinander angeordnet sind. Die gleichmäßige Anordnung bietet den Vorteil, dass keine speziellen Lagezuordnungen zwischen dem Kupplungsgehäuse 2 und dem Deckel 3 vorgenommen werden müssen, da hier einheitliche Konfigurationen zur Herstellung der Verbindung verwendet werden können. Die Mitnahmeelemente 11 werden auch als Finger bezeichnet. Dabei weist das Kupplungsgehäuse zumindest zwei Typen unterschiedlicher Mitnahmeelemente 11.1 und 11.2 auf. Die Mitnahmeelemente 11.1 und 11.2 bilden in ihrer Anordnung zueinander in Umfangsrichtung beabstandete Zwischenräume 12, die in axialer Richtung bezogen zur Rotationsachse R beziehungsweise zur Mittenachse M parallel zu dieser ausgerichtet sind. Die Ausgestaltung der Mitnahmeelemente 11.1 und 11.2 unterscheidet sich in der Ausbildung ihrer Endbereiche 13.1 und 13.2. Dabei können Mitnahmeelemente 11.1 und 11.2 alternierend in Umfangsrichtung angeordnet werden oder aber Mitnahmeelemente 11.1 in größerer Anzahl als die Mitnahmeelemente 11.2 vorgesehen werden, wobei die Anordnung vorzugsweise symmetrisch erfolgt. Dabei bilden die Mitnahmeelemente 11.1 und 11.2 in ihren Endbereichen 13.1 und 13.2 hakenförmige Enden aus. Diese hakenförmigen Enden ermöglichen die Ausbildung der Anschläge 6 in Umfangsrichtung. Der Anschlag 6 ist dabei in einer Richtung in Umfangsrichtung, das heißt bezogen auf die Rotationsachse R, welche der Mittenachse M der Elemente entspricht, in einer Drehrichtung wirksam. Dazu weisen die einzelnen Mitnahmeelemente 11.1 und 11.2 an ihrer in gleicher Richtung in Umfangsrichtung ausgerichteten Seitenfläche 14.11 beziehungsweise 14.21 randoffene Aussparungen 15.1 beziehungsweise 15.2 auf. Die randoffenen Aussparungen 15.1 und 15.2 erstrecken sich dabei in Umfangsrichtung und bilden mit ihrer in Umfangsrichtung weisenden Innenfläche den Anschlag 6 in Umfangsrichtung für eine Drehrichtung aus. An jedem der Mitnahmeelemente 11.1 und 11.2 sind vorzugsweise derartige Aussparungen 15.1 und 15.2 vorgesehen. An der in entgegen gesetzter Drehrichtung weisenden Seitenfläche 14.12 und 14.22 des jeweiligen Mitnahmeelementes 11.1 und 11.2 werden zu 14.11, 14.12 unterschiedliche Flächenbereiche realisiert. Der Endbereich 13.1 der Mitnahmeelemente 11.1 an der Seitenfläche 14.12 ist dabei durch eine in Umfangsrichtung ausgerichtete Fläche im Endbereich des Mitnahmeelementes 11.2 charakterisiert, welche auch als Anschlagfläche 54 in Umfangsrichtung fungieren kann. An der Seitenfläche 4.22 der Mitnahmeelemente 11.2 sind ebenfalls randoffene Aussparungen 16 vorgesehen, die in Umfangsrichtung ausgerichtet sind, jedoch entgegengesetzt zu den Aussparungen 15.2. Diese zweiten randoffenen Aussparungen 16 dienen dabei zum Zusammenwirken mit dem Verbindungsring 4, während die ersten randoffenen Aussparungen 15.1 und 15.2 der Kopplung zwischen dem Deckel 3 und dem Kupplungsgehäuse 2 dienen.

Der Deckel 3 weist Durchgangsöffnungen 17 auf, die sich in Umfangsrichtung über einen Teilbereich dessen bogenförmig der Erstreckung erstrecken, wobei eine Mehrzahl derartiger Durchgangsöffnungen 17 vorgesehen ist. Die einzelne Durchgangsöffnung 17 dient dabei der Realisierung des Formschlusses mit dem Kupplungsgehäuse 2. Dazu sind die Durchgangsöffnungen 17 auf einem Durchmesser angeordnet, der dem Durchmesser der Anordnung der Mitnahmeelemente 11.1 und 11.2 entspricht, wobei vorzugsweise die Mitnahmeelemente 11.1 und 11.2 auf einem Durchmesser angeordnet sind und dementsprechend auch alle Durchgangsöffnungen 17. Die formschlüssige Verbindung zwischen dem Kupplungsgehäuse 2 und dem Deckel 3 erfolgt über die Kopplung in den Mitnahmeelementen 11.1 und 11.2 mit dem Deckel 3, insbesondere über die Durchgangsöffnungen 17. Dazu werden die Mitnahmeelemente 11.1 und 11.2 durch die Durchgangsöffnungen 17 hindurchgeführt. Die Erstreckung der Durchgangsöffnungen 17 in Umfangsrichtung ist derart gewählt, dass diese auf jeden Fall größer als die Erstreckung der Mitnahmeelemente 11.1, 11.2 in Umfangsrichtung ist. Die Mitnahmeelemente 11.1, 11.2 mit den Aussparungen 15.1, 15.2 sowie die Durchgangsöffnungen 17 am Deckel bilden dabei die Mittel 7 zur Realisierung eines Formschlusses in axialer Richtung zwischen Deckel 3 und Kupplungsgehäuse 2 mit einem Spiel. Dazu ist die Breite b der randoffenen Aussparung 15.1 beziehungsweise 15.2 größer als die Dicke d des Deckels 3 im Verbindungsbereich. Zur Montage werden der Deckel 3 und das Kupplungsgehäuse 2 koaxial zueinander angeordnet und ineinander geschoben, so dass die Mitnahmeelemente 11.1 und 11.2 sich durch die Durchgangsöffnungen 17 erstrecken. Dabei kann die Verschiebung ineinander in axialer Richtung von vornherein dadurch begrenzt werden, dass die Ausgestaltung der Mitnahmeelemente 11.1 und 11.2 vor dem Endbereich 13.1, 13.2 mit entsprechend größerer Erstreckung in Umfangsrichtung unter Ausbildung von Anschlägen in axialer Richtung erfolgt, die ein Weiterschieben des Deckels 3 verhindern. Der Deckel 3 wird dabei so weit eingeschoben, dass dieser in Umfangsrichtung mit den randoffenen Aussparungen 15.1 und 15.2 an den Mitnahmeelementen 11.1 und 11.2 in einer Ebene liegt. Der Deckel 3 wird dann gegenüber dem Kupplungsgehäuse 2 verdreht oder aber das Kupplungsgehäuse 2 gegenüber dem Deckel 3, so dass der Deckel 3 mit dem Zwischenraum zwischen den Durchgangsöffnungen 17 in die randoffenen Aussparungen 15.1 und 15.2 eingeschoben wird und mit einer in Umfangsrichtung an der Durchgangsöffnung 17 ausgebildeten Anschlagfläche 18, die entgegengesetzt zum Anschlag 6 in der randoffenen Aussparung 15.1 beziehungsweise 15.2 ausgeführt ist, zum Anliegen kommt. Dadurch wird in Umfangsrichtung der Anschlag in einer Rotationsrichtung gewährleistet, während aufgrund der Aufnahme des Deckels 3 in der randoffenen Aussparung 15.1 und 15.2 eine Fixierung in axialer Richtung möglich ist und je nach Breite der Aussparung gegenüber der Dicke d des Deckels 3 hier ein Spiel vorhanden ist. Dazu wird die den Anschlag 6 bildende Fläche 19 als ebene Fläche ausgeführt, die immer in Kontakt mit der Anschlagsfläche 18 stehen sollte, um den Oberflächenkontaktdruck infolge des eingeleiteten Maschinenmomentes zu reduzieren. Ferner verringert der Kontakt zwischen dem Deckel 3 und dem Kupplungsgehäuse 2 im Bereich der Anschlagsflächen 18 und 6 die axiale Bewegbarkeit zwischen diesen. Das heißt, zwischen diesen wird quasi ein Reibschluss erzeugt. Der Anschlagfläche 18 an der Durchgangsöffnung 17 gegenüberliegend ist die Anschlagfläche 19 ausgebildet. Ist die Kupplung innerhalb der Mitnehmerbaueinheit 1 betätigt, wirkt die Betätigungskraft gegen den Kupplungsdeckel 3, welcher wiederum gegen die in axialer Richtung ausgerichtete Fläche 20 der randoffenen Aussparung 15.1 beziehungsweise 15.2 wirkt, das heißt der Fläche 20, die zum Deckel 3 gerichtet ist und von dem Kupplungsgehäuse 2 weggerichtet ist.

Um jedoch auch im Leerlauf eine möglichst drehfeste Verbindung mit geringer Lärm- und Geräuschentwicklung zu realisieren, ist zusätzlich der Verbindungsring 4 vorgesehen, der die Bewegbarkeit in entgegen gesetzter Richtung, das heißt entgegengesetzt zum von der Antriebsmaschine abgegebenen Drehmoment, das heißt in Leerlaufrichtung, verringert oder ganz unterbindet. Bei diesem handelt es sich um ein ringförmiges Element mit Ausnehmungen 21, die in Umfangsrichtung vorzugsweise in gleichmäßigen Abständen an dem Deckel 3 vorgesehen sind. Bei den Ausnehmungen 21 handelt es sich um Durchgangsöffnungen 21, die sich in Umfangsrichtung über einen Teil des Umfanges erstrecken und komplementär zu Durchgangsöffnungen 21 beziehungsweise zu den Mitnahmeelementen 11.1 und 11.2 ausgebildet sind. Der Verbindungsring 4 schließt sich in axialer Richtung an den Deckel 3 an, wobei dieser den Deckel 3 gegenüber dem Kupplungsgehäuse 2 in der anderen zweiten Verdrehrichtung in Umfangsrichtung, die zu der ersten entgegengesetzt ausgerichtet ist, sichert. Die Durchgangsöffnungen 21 sind Bestandteil der Mittel 10 zur Realisierung einer axialen Sicherung zwischen Deckel 3 und Gehäuse 2, insbesondere durch Formschluss, der durch eine Bajonettverbindung 5 zwischen Deckel 3, Verbindungsring 4 und Kupplungsgehäuse 2 erzeugt wird. Ferner sind Mittel 22 zur Realisierung einer Schnappverbindung vorgesehen. Diese umfassen zumindest ein erstes Federelement 23, das an der in der Einbaulage zum Deckel 3 gewandten Stirnseite 24 des Verbindungsringes 4 angeordnet ist. Ferner sind Mittel 25 zur Begrenzung des Drehmomentes vorgesehen. Das Federelement 23 und die Mittel 25 sind dabei vorzugsweise integraler Bestandteil des Verbindungsringes 4. Wird der Verbindungsring 4 gegen den Kupplungsdeckel 3 gedrückt, wird der Verbindungsring 4 zwischen den Mitnahmeelementen 11.1 und 11.2 am Kupplungsgehäuse 2 geführt. Die Mitnahmeelemente 11.1 und 11.2 durchsetzen quasi ebenfalls mit ihren Endbereichen 13.1 und 13.2 die Ausnehmungen beziehungsweise Durchgangsöffnungen 21. Dabei wirkt das Federelement 23 gegen die Oberfläche 26 und gleitet in die Aussparung beziehungsweise Durchgangsöffnung 17 am Deckel 3 hinein und wirkt gegen die in Umfangsrichtung weisende Fläche 19 der Durchgangsöffnung 17, welche der Anschlagsfläche 18 gegenüberliegt. Wird der Verbindungsring 4 weiter hinein geschoben und erreicht den Boden des Deckels 3, bewirkt die Kraft, die durch die Federvorspannung erzeugt wird, dass die benachbarte Durchgangsöffnung 21 in Umfangsrichtung betrachtet in die Aussparung 16 am Mitnahmeelement 11.2 hinein gleitet und mit dieser quasi eine Verriegelung zwischen dem Deckel 3 und dem Gehäuse 2 in axialer Richtung vornimmt. Der Verbindungsring 4 bewirkt somit über die Bajonettverbindung 52 zwischen dem Verbindungsring 4 und dem Deckel 3 der damit erfolgenden Lagezuordnung in Umfangsrichtung zwischen den benachbarten Ausnehmungen beziehungsweise Durchgangsöffnungen 21 gegenüber den Mitnahmeelementen, insbesondere den Mitnahmeelementen 11.2, eine Sicherung in axialer Richtung. Dabei ist zu beachten, dass die einzelnen Mitnahmeelemente 11.1 und 11.2 in ihrer Breite auf diese Art der Verbindung abzustimmen sind. Das gilt ferner auch für die Ausgestaltung der Ausnehmungen und Durchgangsöffnungen 21 beziehungsweise 17 und 15.1 und 15.2, um hier eine spielfreie Mitnehmerbaueinheit 1 zu realisieren. Wie bereits ausgeführt, zeigt die Figur 1a die Ausgestaltung der einzelnen Elemente in Explosionsdarstellung. Figur 1b verdeutlicht einen Ausschnitt aus einem Verbindungsring 4. Erkennbar sind hier die in Umfangsrichtung den Ring durchsetzenden Ausnehmungen 21 beziehungsweise Durchgangsöffnungen. Dabei wird zwischen Durchgangsöffnungen 21.1 mit den Mitteln 22, Durchgangsöffnungen 21.2, die mit Mitteln 25 versehen sind, unterschieden und ferner eine weitere Art von Durchgangsöffnungen 21.3, die gegenüber den anderen Durchgangsöffnungen 21.2 und 21.1 vorzugsweise mit geringerer Erstreckung in Umfangsrichtung ausgeführt ist und zur Aufnahme der Mitnahmeelemente 11.2 hinsichtlich der Ausgestaltung ausgelegt ist. Vorzugsweise erfolgt die Anordnung über den Gesamtumfang betrachtet zwischen den unterschiedlichen Typen entsprechend symmetrisch. Die Durchgangsöffnungen 21.3 wirken dabei nur mit den Mitnahmeelementen 11.2 zusammen, während die Durchgangsöffnungen 21.1 und 21.2 mit den Mitnahmeelementen 11.1 zusammenwirken. Es ist dabei darauf zu achten, dass die Ausgestaltung des Kupplungsgehäuses 2 mit Mitnahmeelementen 11.1 und 11.2 derart auf die Ausgestaltung des Verbindungsringes 4 abgestimmt ist, dass hier den einzelnen Mitnahmeelementen 11.1 auch die entsprechenden Durchgangsöffnungen 21.1 beziehungsweise 21.2 und dem Mitnahmeelement 11.2 eine entsprechende Durchgangsöffnung 21.3 am Ring 4 gegenüberliegt. Dabei kann lediglich ein einziges Federelement 23 vorgesehen werden, wobei vorzugsweise eine symmetrische Ausführung über den Umfang verteilt gewählt wird und zumindest zwei Federelemente 23 als Mittel zur Realisierung einer Bajonettverbindung vorgesehen werden, die symmetrisch am Verbindungsring 4 angeordnet sind. Dies gilt in Analogie für die Mitnahmeelemente 11.2 am Kupplungsgehäuse 2 und die Durchgangsöffnungen 21.3 am Verbindungsring 4. Die Mittel 25 zur Begrenzung des Drehmomentes in Form einer Rampe 28 können einer Mehrzahl von Mitnahmeelementen 11.1 zugeordnet werden. Dabei ist die Rampe am Verbindungsring 4 derart ausgebildet, dass diese sich an der Durchgangsöffnung 21.2 in axialer Richtung von dieser als Vorsprung erstreckt und eine Anschlagsfläche 29 in Umfangsrichtung bildet, die bei Verdrehung des Verbindungsringes 4 in Umfangsrichtung beziehungsweise eines Elementes der Kopplung zwischen Deckel 3 und Kupplungsgehäuse 2 wirksam wird beziehungsweise am Deckel 3 an den Anschlagflächen 19 wirksam wird. Die Rampe 28 kann, muss jedoch nicht zwingend vorgesehen werden. Diese bietet jedoch den Vorteil, dass diese bei erhöhten Leerlaufmomenten zum Tragen gelangt und hier eine Relativbewegung zwischen den einzelnen Elementen Deckel 3 und Kupplungsgehäuse 2 dadurch vermeidet.

Die Figur 1c verdeutlicht anhand eines Ausschnittes aus einer Perspektivdarstellung der Verbindung zwischen Deckel 3 und Kupplungsgehäuse 2 die formschlüssige Verbindung zwischen diesen. Erkennbar sind die beiden unterschiedlichen Mitnahmeelemente 11.1 und 11.2 mit unterschiedlichen Endbereichen 13.1 und 13.2, die sich durch die Durchgangsöffnungen 17 hindurch erstrecken und nach Verdrehung des Deckels 3 gegenüber den in Umfangsrichtung randoffenen Aussparungen 15.1 und 15.2 den Deckel 3 in Umfangsrichtung in einer Richtung sichern, indem die Anschlagsfläche 6 mit der Fläche 18 in Wirkverbindung tritt beziehungsweise die Anschlagsfläche 18 die Anschlagsfläche 6 am jeweiligen Mitnahmeelement 11.1, 11.2 kontaktiert. Ferner umgreift das Mitnahmeelement 11.1 beziehungsweise 11.2 mit seinem Endbereich 13.1 beziehungsweise 13.2 hakenförmig, beziehungsweise bei vollständiger Betrachtung zangenförmig den Deckel 3 im Bereich zwischen den Durchgangsöffnungen 17. Eine Drehmomentenübertragung ist hier nur in einer Richtung möglich, das heißt bei Rotationsrichtung des Gehäuses 2 in Richtung der Ausrichtung der Anschlagsfläche 6. Bei entgegen gesetzter Drehbewegung wäre eine axiale Sicherung zwischen Deckel 3 und Gehäuse 2 nicht mehr gegeben. Diese axiale Sicherung wird dabei vorzugsweise mit Spiel, denkbar jedoch auch ohne Spiel beziehungsweise lediglich mit einer Spielpassung zu Montagezwecken zwischen dem Deckel 3 und dem Kupplungsgehäuse 2 über die unterschiedlichen Breiten der Aussparung 15.1 beziehungsweise 15.2 in axialer Richtung und der Dicke d des Deckels 3 realisiert. Die Figur 1c verdeutlicht dabei die Ansicht nach Zusammenführung von Deckel 3 und Kupplungsgehäuse 2, bei welcher eine Verdrehung in die Anschlagsposition in Umfangsrichtung bereits erfolgt ist.

Die Figur 1d verdeutlicht anhand einer Perspektivabsicht einen Ausschnittes aus einer Zusammenbaudarstellung von Kupplungsgehäuse 2, Deckel 3 und Verbindungsring 4 den montierten Zustand. Die Figur 1e verdeutlicht eine Darstellung einer Ansicht von oben gemäß Figur 1d und Figur 1f verdeutlicht einen Ausschnitt A in vergrößerter Darstellung aus Figur 1e der Mitnehmerbaueinheit 1 im montierten Zustand. Erkennbar sind hier die Mitnahmeelemente 11. 1 und 11.2, die die entsprechenden Durchgangsöffnungen 21.1 bis 21.3 durchsetzen. Dabei liegt das Mitnahmeelement 11.1 mit seiner von der randoffenen Aussparung 15.1 weggerichteten Seitenfläche 4.12 als Anschlagsfläche 54 an der Fläche 27 der Durchgangsöffnung 21.1, die in Umfangsrichtung zu dieser weist und ausgerichtet ist, an. Das Federelement 23, welches im Bereich der Ausnehmung beziehungsweise Durchgangsöffnung 21.1 angeordnet ist, erstreckt sich in den Deckel 3 hinein. In dieser Lage ist ersichtlich, dass sich das Federelement 23 in axialer Richtung in einer in Unfangsrichtung ausgerichteten Fläche der Ausnehmung 17 am Deckel 3 abstützt. In dieser Lage sind ferner die in axialer Richtung in Einbaulage sich erstreckenden Rampen 28 zu sehen. Diese weisen jedoch mit ihrer Anschlagsfläche 29 einen Abstand zur Ausnehmung 17 beziehungsweise zur entsprechenden in Umfangsrichtung ausgerichteten Fläche 19 am Deckel 3 auf. Diese Montagesituation stellt den Normalfall während des normalen Betriebes bei Drehmomentübertragung dar. Wird jedoch ein Leerlaufmoment in die Mitnehmerbaueinheit 1 eingetragen, wird die Rampe 28 wirksam, indem diese gegen den Deckel 3 wirkt beziehungsweise für diesen einen Anschlag bildet.

Die Figur 1g verdeutlicht eine Zusammenbaudarstellung der gesamten Mitnehmerbaueinheit 1.

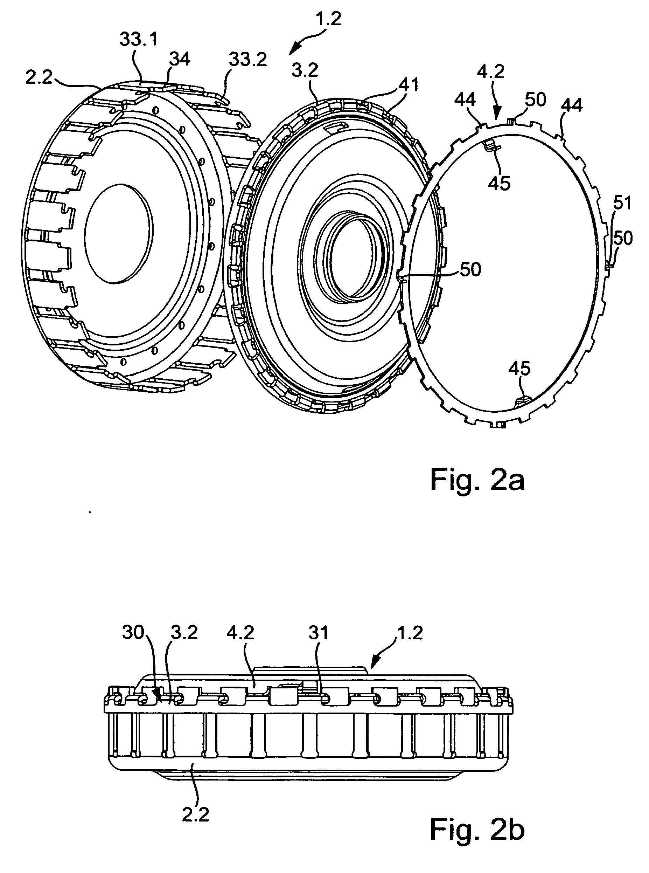

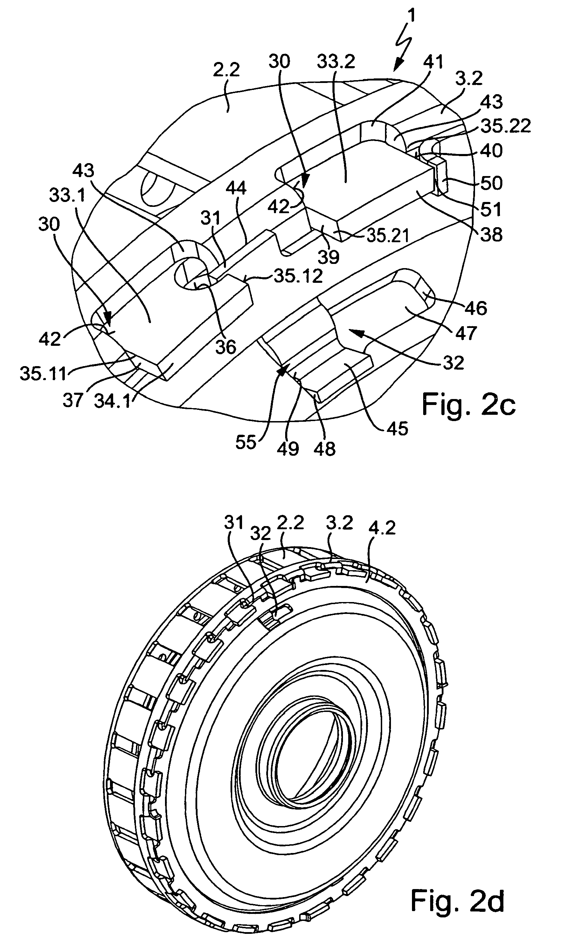

Die Figuren 2a bis 2d verdeutlichen eine weitere zweite Ausführungsform einer erfindungsgemäßen Mitnehmerbaueinheit 1.2 zur Realisierung einer Verbindung zwischen einem Deckel 3.2 und einem Kupplungsgehäuse 2.2 über einen Verbindungsring 4.2. Auch bei dieser wird ein Formschluss zwischen dem Kupplungsgehäuse 2.2 und dem Deckel 3.2 realisiert, der über einen Verbindungsring 4.2 in axialer und in Umfangsrichtung gesichert wird. Auch hier sind Mittel 30 zur Realisierung eines Formschlusses in Umfangsrichtung zwischen Deckel 3.2 und Kupplungsgehäuse 2.2 vorgesehen. Die Fixierung in axialer Richtung wird im Wesentlichen über eine Bajonettverbindung 31 zwischen Kupplungsgehäuse 2.2, Deckel 3.2 und den Verbindungsring 4.4 realisiert. Die Fixierung in Umfangs- und axialer Richtung erfolgt über die Schnappverbindung 32.

Figur 2a verdeutlicht dabei die Ausführung der einzelnen Bauteile in Explosionsdarstellung. Erkennbar ist hier das Kupplungsgehäuse 2.2, welches im Wesentlichen als scheibenförmiges Element mit dem Bereich des Außenumfanges angeordneten und sich in axialer Richtung erstreckenden Mitnahmeelementen. Die Mitnahmeelemente sind dabei von in axialer Richtung hervorstehenden Vorsprüngen gebildet, die in Umfangsrichtung beabstandet zueinander angeordnet sind. Die Mitnahmeelemente weisen einen Endbereich auf, der der Realisierung des Formschlusses mit dem Deckel 3.2 dient. Das Kupplungsgehäuse 2.2 weist zwei unterschiedliche Arten von Mitnahmeelementen 33.1 und 33.2 auf, die sich im Wesentlichen durch die Ausgestaltung ihrer Endbereiche 34.1 und 34.2 unterscheiden. Ein erster Endbereich 34.1 der Mitnahmeelemente 33.1 ist derart ausgeführt, dass dieser analog wie in Figur 1a für das Mitnahmeelement 11.1 beschrieben, eine hakenförmige Ausgestaltung aufweist. Dies bedeutet, dass an einer Seitenfläche 35.12 randoffene Aussparungen 36 vorgesehen sind, die sich in Umfangsrichtung erstrecken und an der gegenüberliegenden Seitenfläche 35.11 des Mitnahmeelementes 33.1 lediglich eine Anschlagfläche 37 vorgesehen ist. Das zweite Mitnahmeelement 33.2 ist dadurch charakterisiert, dass dieses einen vorzugsweise symmetrischen Vorsprung 38 am Endbereich 34.2 aufweist, das heißt quasi zwei Anschlagflächen 39 und 40 in Umfangsrichtung betrachtet bildet, die in Umfangsrichtung einander entgegengesetzt an den Seitenflächen 35.21 und 35.22 ausgerichtet sind. Der Deckel 3.2 weist eine dazu komplementäre Anzahl an Aussparungen 41 auf, durch die die Endbereiche 34.1 und 34.2 der Mitnahmeelemente 33.1 und 33.2 hindurch geleitet werden können. Im Unterschied zur in Figur 1 dargestellten Lösung wird das über die Antriebsmaschine eingeleitete Moment und das Leerlaufmoment durch die Kontaktfläche 42 zwischen den Kupplungsgehäusemitnahmeelementen 33.1, 33.2 und dem Deckel 3.2 realisiert. Dabei treten die Anschlagflächen 37 sowie 39 mit den jeweiligen Kontaktflächen 42 der Aussparungen 41 und für die Mitnahmeelemente 33.2 die Anschlagfläche 40 mit der Kontaktfläche 43 an der Aussparung 41 in Wirkverbindung. Insbesondere über die Mitnahmeelemente 33.2 wird eine drehfeste Verbindung in Umfangsrichtung in beiden Richtungen realisiert, wobei vorzugsweise die Breite des Endbereiches 34.2 der Breite der Aussparung 41 in Umfangsrichtung betrachtet entspricht, so dass ein flächiges Anlegen, nach Möglichkeit mit einer Passgenauigkeit im Bereich maximal einer Spielpassung liegt. Die Anschlagfläche 37 am Mitnahmeelement 33.1 wirkt dabei nur in einer Drehrichtung. Dabei wird das Antriebsmoment über die Mitnahmeelemente 33.1 und 33.2 für die Anschlagsflächen 37 beziehungsweise 39 in den Kontaktflächen 42 am Deckel 3.2 eingebracht, während das Leerlaufmoment über die Mitnahmeelemente 33.2 an der Anschlagsfläche 40 im Zusammenwirken mir der Kontaktfläche 43 im Deckel 3.2 eingetragen wird und umkehrt. Die Fixierung des Formschlusses 30 in Umfangsrichtung erfolgt in axialer Richtung über den Verbindungsring 4.2. Dieser weist in radialer Richtung ausgerichtete Vorsprünge 44 auf, die im gleichmäßigen Abstand zueinander in Umfangsrichtung angeordnet sind und hinsichtlich ihrer Breite kleiner als die Abstände in Umfangsrichtung zwischen zwei aufeinander folgenden Aussparungen 41 am Deckel 4.2 sind.

Die Aussparungen 36 an den Mitnahmeelementen 33.1, die sich an der Seitenfläche 35.12 dieser in Umfangsrichtung erstrecken, ist hinsichtlich ihrer Abmessungen in axialer Richtung bezogen auf die Rotationsachse R derart bemessen, dass diese zumindest der Breite des Deckels 3.2 und des Verbindungsringes 4.2 in axialer Richtung entspricht, so dass der Verbindungsring 4.2 in die Aussparung 36 hinein verdreht werden kann und somit eine Fixierung in axialer Richtung zwischen Deckel und Gehäuse 3.2 und 2.2 durch eine Bajonettverbindung 31 ermöglicht. Ferner ist im Bereich eines derartigen Vorsprunges ein Federelement 45 vorgesehen, das der Realisierung einer Schnappverbindung 55 dient. Dieses wirkt mit einem in Umfangsrichtung ausgebildeten Schlitz 46 im Deckel 3.2 zusammen, so dass hier eine Fixierung in Umfangsrichtung möglich ist. Der Schlitz 46 ist durch zwei Bereiche charakterisiert, einen ersten Bereich 47 und einen zweiten Bereich 48, wobei der zweite Bereich 48 einen Anschlag 49 in Umfangsrichtung für das Federelement 45 bildet.

Die Figur 2b verdeutlicht dabei eine Perspektivansicht im bereits montierten Zustand der Mitnehmerbaueinheit 1 anhand eines Ausschnittes aus dieser. Ferner sind weitere Federelemente 50 am Ring 4.4 vorgesehen, die der Eliminierung von Geräuschen während des Betriebs dienen, insbesondere im Leerlauf.

Die Anordnung der Federelemente 45 und der dazu gehörenden Schlitze 46 erfolgt vorzugsweise symmetrisch bezogen auf den Verbindungsring 4.2. Vorzugsweise sind zumindest zwei derartige Federelemente 45 und zwei derartige Schlitze 46 im Deckel 3.2 vorgesehen. Denkbar wäre auch eine Mehrzahl derartiger Federelemente, insbesondere jedoch zur leichten Demontage in der Anzahl begrenzt. In Analogie gelten diese Aussagen auch für die weiteren Federelemente 50. Diese sind ebenfalls am Außenumfang des Verbindungsringes 4.2 angeordnet, wobei die Anordnung derart erfolgt, dass diese eine Anschlagfläche 51 in Umfangsrichtung für das Mitnahmeelement 33.2 mit der Anschlagsfläche 40 bilden, das heißt in Leerlaufrichtung.

Die Figur 2d verdeutlicht eine Mitnehmerbaueinheit 1.2 gemäß der zweiten Ausführungsform im zusammengebauten Zustand. Bei allen Ausführungen ist jedoch entscheidend, dass eine entsprechende Abstimmung zwischen den einzelnen Mitnahmeelementen, Ausnehmungen und Anschlagflächen erfolgt, um den gewünschten Effekt zu erzielen. Die Anzahl der Mitnahmeelemente 33.1 und 33.2 mit entsprechenden Aussparungen 36 oder frei von diesen zur Realisierung eines einseitigen Kontaktes oder eines beidseitigen Kontaktes in Umfangsrichtung mit dem Deckel 3.2 wird vorzugsweise auf der Grundlage der erforderlichen Flächendrücke sowie der Drehmomentberechnungen bestimmt, um die Leistung und die Verfügbarkeitserfordernisse zu erfüllen. Ähnlich zur in Figur 1 beschriebenen Lösung wird der Verbindungsring 4.2 genutzt, um die Komponenten in axialer Richtung zu fixieren, um eine Gegenkraft zur Kupplungsbetätigungskraft aufzubringen und Lärm und ein Rasseln zwischen dem Kupplungsgehäuse 2.2 und dem Deckel 3.2 zu vermeiden. Dazu weist dieser Verbindungsring eine Mehrzahl von Merkmalen auf, die helfen, diese Funktion zu erzielen. Zuerst wird der Deckel mit dem Kupplungsgehäuse 2.2 in Verbindung gebracht, wobei dann in axialer Richtung der Verbindungsring 4.2 hinzugefügt wird. Die Vorsprünge 44 in radialer Richtung werden zwischen die einzelnen Kupplungsgehäuse und Mitnahmeelemente verbracht und das Federelement 45 in den Schlitz eingebracht, das im Deckelelement 3.2 angeordnet ist. Der Verbindungsring 4.2 wird dann gegen die vom Kupplungsgehäuse 2.2 abgewandte Deckelstirnseite gedrückt und verdreht, so dass die Vorsprünge 44 sich in die Aussparungen 36 zwischen Deckel 3.2 und Kupplungsgehäuse 2.2 bewegen. Sowie der Verbindungsring in eine Position, in welcher die Aussparungen von den Vorsprüngen 44 erreicht werden, verdreht wird, erweitert sich das Federelement 45 in den größeren Bereich 48 des Schlitzes 46 am Kupplungsdeckel 3.2. Dieses verriegelt den Verbindungsring 4.2 in seiner Position und verhindert eine weitere Verdrehung. Wird die Kupplung betätigt, wirkt die Betätigungskraft gegen den Deckel 3.2, dann durch die Verbindungsringkontaktfläche zu den Kupplungsgehäusemitnahmeelementen 33.1. Ein weiteres Federelement 50 eliminiert den Lärm zwischen dem Deckel 3.2 und dem Kupplungsgehäuse 2.2 durch Erzeugung einer Gegenkraft gegen die Mitnahmeelemente 33.2 zwischen dem Deckel 3.2 und dem Kupplungsgehäuse 2.2, sobald der Ring 4.2 im Schlitz verriegelt wird und dabei eine Vorspannung zwischen dem Kupplungsgehäuse 2.2 und dem Deckel 3.2 realisiert.

### Bezugszeichenliste

- 1: Mitnehmerbaueinheit
- 2: Kupplungsgehäuse
- 3: Deckel
- 4: Verbindungsring
- 5: Bajonettverbindung
- 6: Anschlag
- 7: Mittel zur Realisierung eines Formschlusses in axialer Richtung zwischen Deckel und Gehäuse mit Spiel
- 8: Mittel zur Erzeugung eines Anschlages in Umfangsrichtung
- 9: Mittel zur Realisierung eines Formschlusses in Umfangsrichtung
- 10: Mittel zur Realisierung einer axialen Sicherung zwischen Deckel und Gehäuse
- 11: Mitnahmeelemente
- 11.1, 11.2: Mitnahmeelement
- 12: Zwischenraum
- 13.1,13.2: Endbereich
- 14.11, 14.12: Seitenfläche
- 14.21, 14.22: Seitenfläche
- 15.1, 15.2: Aussparung
- 16: randoffene Aussparung
- 17: Durchgangsöffnung
- 18: Anschlagfläche
- 19: Anschlagfläche
- 20: Fläche
- 21: Ausnehmung/Durchgangsöffnung
- 21.1, 21.2, 21.3: Durchgangsöffnung
- 22: Mittel zur Realisierung einer Schnappverbindung
- 23: Federelement
- 24: Stirnseite
- 25: Mittel zur Begrenzung des Drehmomentes
- 26: Oberfläche
- 28: Rampe
- 29: Anschlagsfläche
- 30: Mittel zur Realisierung eines Formschlusses in Umfangsrichtung zwischen Deckel und Kupplungsgehäuse
- 31: Bajonettverbindung
- 33.1, 33.2: Mitnahmeelement
- 34.1, 34.2: Endbereich
- 35.1, 35.2: Seitenfläche
- 36: randoffene Aussparung
- 37: Anschlagfläche
- 38: Vorsprung
- 39: Anschlagfläche
- 40: Anschlagfläche
- 41: Aussparungen
- 42: Kontaktfläche
- 43: Kontaktfläche
- 44: Vorsprung
- 45: Federelement
- 46: Schlitz
- 47: erster Bereich
- 48: zweiter Bereich
- 49: Anschlag
- 50: Federelement
- 51: Anschlagfläche
- 52: Bajonettverbindung
- 53: Schnappmechanismus
- 54: Anschlagfläche
- 55: Schnappverbindung
- b: Breite
- d: Dicke
- R: Rotationsachse
- M: Mittenachse

## Patentansprüche

1. Mitnehmerbaueinheit (1, 1.2) für Kupplungsanordnungen, insbesondere nasslaufende Doppelkupplungsanordnungen, mit einem Kupplungsgehäuse (2, 2.2) und einem Deckel (3, 3.2), die unter Umschließung eines Innenraumes (I) zur Aufnahme der Kupplungsanordnung miteinander verbunden sind, wobei der Deckel (3, 3.2) am Kupplungsgehäuse (2, 2.2) über einen Verbindungsring (4, 4.2) gesichert ist, **dadurch gekennzeichnet, dass** die Verbindung zwischen dem Deckel (3, 3.2) und dem Kupplungsgehäuse (2, 2.2) in Umfangsrichtung über elastische Elemente (23, 45) vorgespannt ist.

2. Mitnehmerbaueinheit (1, 1.2) nach Anspruch 1, **dadurch gekennzeichnet, dass** der Deckel (3, 3.2) am Kupplungsgehäuse (2, 2.2) über den Verbindungsring (4, 4.2) in axialer Richtung und in Umfangsrichtung gesichert ist.

3. Mitnehmerbaueinheit (1, 1.2) nach einem der Ansprüche 1 oder 2, **dadurch gekennzeichnet, dass** die Verbindung zwischen dem Deckel (3, 3.2) und dem Kupplungsgehäuse (2, 2.2) über den Verbindungsring (4, 4.2) drehfest und frei von Spiel in axialer Richtung und/oder Umfangsrichtung ist.

4. Mitnehmerbaueinheit (1) nach einem der Ansprüche 1 bis 3, **dadurch gekennzeichnet, dass** der Deckel (3) und das Kupplungsgehäuse (2) in Umfangsrichtung begrenzt gegeneinander verdrehbar sind.

5. Mitnehmerbaueinheit (1) nach einem der Ansprüche 1 bis 4, **dadurch gekennzeichnet, dass** zwischen dem Deckel (3) und dem Kupplungsgehäuse (2) Mittel zur Realisierung (7) eines Formschlusses in axialer Richtung unter Spiel und Mittel (8) zur Realisierung eines Anschlages in einer Drehrichtung in Umfangsrichtung vorgesehen sind.

6. Mitnehmerbaueinheit (1) nach Anspruch 5, **dadurch gekennzeichnet, dass** der Verbindungsring (4) mit dem Deckel (3) über eine Schnappverbindung (53) in Umfangsrichtung drehfest verbunden ist und der Deckel (3) mit dem Kupplungsgehäuse (2) in axialer Richtung über einen Formschluss verspannt ist.

7. Mitnehmerbaueinheit (1) nach Anspruch 6, **dadurch gekennzeichnet, dass** der Formschluss zwischen dem Deckel (3) mit dem Kupplungsgehäuse (2) in axialer Richtung über eine Bajonettverbindung (5) gebildet ist.

8. Mitnehmerbaueinheit (1) nach einem der Ansprüche 5 bis 7, **dadurch gekennzeichnet, dass** das Kupplungsgehäuse (2) Mitnahmeelemente (11.1, 11.2) aufweist, die im Bereich des Außenumfanges in Umfangsrichtung gleichmäßig zueinander beabstandet angeordnet sind, wobei Mitnahmeelemente (11.1, 11.2) unterschiedliche Endbereiche (13.1, 13.2) unter Ausbildung erster Mitnahmeelemente (11.1) und zweiter Mitnahmeelemente (11.2) gebildet werden und diese mit im Deckel (3) angeordneten und sich in Umfangsrichtung erstreckenden komplementären Ausnehmungen (17), die durch eine größere Erstreckung in Umfangsrichtung als die Erstreckung der Mitnahmeelemente (11.1, 11.2) in Umfangsrichtung im Endbereich (13.1, 13.2) charakterisiert sind, zusammenwirken, wobei an einer ersten in Umfangsrichtung in gleicher Richtung ausgerichteten Seitenfläche (14.11, 14.21) der Mitnahmeelemente (11.1, 11.2) sich in Umfangsrichtung erstreckende randoffene Aussparungen (15.1, 15.2) zur Aufnahme des Deckels (3) vorgesehen sind und an den gegenüberliegenden Seitenflächen (14.12) , die ersten Mitnahmeelemente (11.1) durch eine Anschlagsfläche (54) für eine Aussparung (17) am Deckel (3) charakterisiert sind und die zweiten Mitnahmeelemente (11.2) durch eine randoffene Aussparung (16) zur Aufnahme des Verbindungsringes (4).

9. Mitnehmerbaueinheit (1) nach Anspruch 8, **dadurch gekennzeichnet, dass** der Verbindungsring (4) in Umfangsrichtung gleichmäßig angeordnete komplementäre Aussparungen (21, 21.1, 21.2, 21.3) zu den Aussparungen (17) am Deckel (3) aufweist, die größer als die Erstreckung der Mitnahmeelemente (11.1, 11.2) in Umfangsrichtung sind, jedoch kleiner als die Summe des Abstandes zwischen zwei Mitnahmeelementen (11.1, 11.2), wobei am Verbindungsring (4) Mittel (22) zur Realisierung einer Schnappverbindung (53) vorgesehen sind, die mit einem zugehörigen Schlitz (17) am Deckel (3) in Wirkverbindung treten.

10. Mitnehmerbaueinheit (1) nach Anspruch 9, **dadurch gekennzeichnet, dass** der zugehörige Schlitz im Deckel (3) von einer in Umfangsrichtung angeordneten und von Mitnahmeelementen (11.1, 11.2) durchsetzten Aussparung (17) gebildet wird.

11. Mitnehmerbaueinheit (1) nach einem der Ansprüche 6 bis 10, **dadurch gekennzeichnet, dass** die Mittel (22) zur Realisierung der Schnappverbindung (53) wenigstens ein Federelement (23) aufweist, das in axialer Richtung ausgerichtet ist, jedoch in Umfangsrichtung wirkt.

12. Mitnehmerbaueinheit (1) nach einem der Ansprüche 3 bis 11, **dadurch gekennzeichnet, dass** eine Drehmomentbegrenzung (25) von einer Rampe (28) gebildet wird, die durch einen in axialer Richtung ausgerichteten und sich in Einbaulage in die Durchgangsöffnung (17) am Deckel (3) erstreckenden Vorsprung gebildet wird, der eine in Umfangsrichtung ausgerichtete Anschlagfläche (29) aufweist, die mit einer Anschlagfläche (19) am Deckel (3) in Wirkverbindung bringbar ist.

13. Mitnehmerbaueinheit (1.2) nach einem der Ansprüche 1 bis 4, **dadurch gekennzeichnet, dass** zwischen dem Deckel (3, 3.2) und dem Kupplungsgehäuse (2, 2.2) Mittel (30) zur Realisierung eines Formschlusses in Umfangsrichtung vorgesehen sind.

14. Mitnehmerbaueinheit (1.2) nach Anspruch 13, **dadurch gekennzeichnet, dass** der Verbindungsring (4.2) mit dem Deckel (3.2) über eine Schnappverbindung (55) in Umfangsrichtung drehfest verbunden ist und der Deckel (3.2) mit dem Kupplungsgehäuse (2.2) in axialer Richtung über einen Formschluss verspannt ist.

15. Mitnehmerbaueinheit (1.2) nach Anspruch 14, **dadurch gekennzeichnet, dass** der Formschluss zwischen dem Deckel (3.2) mit dem Kupplungsgehäuse (2.2) in axialer Richtung über eine Bajonettverbindung (31) gebildet ist.

16. Mitnehmerbaueinheit (1.2) nach einem der Ansprüche 13 bis 15, **dadurch gekennzeichnet, dass** das Kupplungsgehäuse (2.2) Mitnahmeelemente (33.1, 33.2) aufweist, die im Bereich des Außenumfanges in Umfangsrichtung gleichmäßig zueinander beabstandet angeordnet sind, wobei Mitnahmeelemente (33.1, 33.2) unterschiedliche Endbereiche (34.1, 34.2) unter Ausbildung erster Mitnahmeelemente (33.1) und zweiter Mitnahmeelemente (33.2) aufweisen und die einen Mitnahmeelemente (33.2) in Umfangsrichtung an den Seitenflächen (35.21, 35.22) jeweils eine Anschlagfläche (39, 40) bilden, die mit dazu komplementären Flächen (42, 43) an einer Aussparung (41) im Deckel (3.2) wirksam wird und die anderen Mitnahmeelemente (33.1) nur eine in Funktionsrichtung wirkende Anschlagfläche (37) in Umfangsrichtung aufweist, während an der gegenüberliegenden Seitenfläche (35.22) eine Aussparung (36) zur wenigstens teilweisen Einführung des Verbindungsringes (4.2) zur axialen Verspannung zwischen Deckel (3.2) und Kupplungsgehäuse (2) vorgesehen ist.

17. Mitnehmerbaueinheit (1) nach einem der Ansprüche 14 bis 16, **dadurch gekennzeichnet, dass** der Verbindungsring (4.2) Mittel zur Realisierung der Schnappverbindung (55) aufweist, die mit einem dazu komplementären Schlitz (46) am Deckel (3.2) zusammenwirken.

18. Mitnehmerbaueinheit (1, 1.2) nach einem der Ansprüche 3 bis 17, **dadurch gekennzeichnet, dass** die elastischen Elemente von den Mitteln zur Realisierung einer Schnappverbindung (53, 55) gebildet werden.

19. Mitnehmerbaueinheit (1, 1.2) nach einem der Ansprüche 8 bis 18, **dadurch gekennzeichnet, dass** die Mitnahmeelemente (11.1, 11.2, 33.1, 33.2), die Aussparungen (17, 21, 41) am Deckel (3) und dem Verbindungsring (4) auf einem Durchmesser angeordnet sind.

20. Mitnehmerbaueinheit (1) nach einem der Ansprüche 1 bis 19, **dadurch gekennzeichnet, dass** die Mitnahmeelemente (11.1, 11.2, 33.1, 33.2), die Aussparungen (17, 21, 41) am Deckel (3) und dem Verbindungsring (4) auf einem unterschiedlichen Durchmesser angeordnet sind.

21. Mitnehmerbaueinheit (1) nach einem der Ansprüche 1 bis 20, **dadurch gekennzeichnet, dass** die Mitnahmeelemente (11.1, 11.2, 33.1, 33.2) sich in axialer Richtung erstrecken und der Verbindungsring (4, 4.2) und der Deckel (3, 3.2) als scheibenförmige Elemente ausgeführt sind.

## Claims

1. Driver unit (1, 1.2) for clutch arrangements, in particular wet-running double clutch arrangements, having a clutch housing (2, 2.2) and a cover (3, 3.2) which are connected to one another so as to enclose an interior space (I) for accommodating the clutch arrangement, wherein the cover (3, 3.2) is secured to the clutch housing (2, 2.2) by means of a connecting ring (4, 4.2), **characterized in that** the connection between the cover (3, 3.2) and the clutch housing (2, 2.2) is preloaded in the circumferential direction by means of elastic elements (23, 45).

2. Driver unit (1, 1.2) according to Claim 1, **characterized in that** the cover (3, 3.2) is secured in the axial direction and in the circumferential direction to the clutch housing (2, 2.2) by means of the connecting ring (4, 4.2).

3. Driver unit (1, 1.2) according to either of Claims 1 and 2, **characterized in that** the connection between the cover (3, 3.2) and the clutch housing (2, 2.2) by means of the connecting ring (4, 4.2) is rotationally conjoint and free from play in the axial direction and/or circumferential direction.

4. Driver unit (1) according to one of Claims 1 to 3, **characterized in that** the cover (3) and the clutch housing (2) are rotatable relative to one another in the circumferential direction to a limited extent.

5. Driver unit (1) according to one of Claims 1 to 4, **characterized in that**, between the cover (3) and the clutch housing (2), there are provided means (7) for realizing positive locking in the axial direction with play and means (8) for realizing a stop in one direction of rotation in the circumferential direction.

6. Driver unit (1) according to Claim 5, **characterized in that** the connecting ring (4) is connected to the cover (3) for conjoint rotation in the circumferential direction by means of a snap-action connection (53), and the cover (3) is clamped to the clutch housing (2) in the axial direction by means of positive locking.

7. Driver unit (1) according to Claim 6, **characterized in that** the positive locking between the cover (3) and the clutch housing (2) in the axial direction is formed by means of a bayonet connection (5).

8. Driver unit (1) according to one of Claims 5 to 7, **characterized in that** the clutch housing (2) has driver elements (11.1, 11.2) which are arranged spaced apart uniformly from one another in the circumferential direction in the region of the outer circumference, wherein driver elements (11.1, 11.2) have different end regions (13.1, 13.2) forming first driver elements (11.1) and second driver elements (11.2), and these interact with complementary recesses (17) which are arranged in the cover (3) and which extend in the circumferential direction and which are **characterized by** a greater extent in the circumferential direction than the extent of the driver elements (11.1, 11.2) in the circumferential direction in the end region (13.1, 13.2), wherein cutouts (15.1, 15.2) which extend in the circumferential direction and which are open at the edge and which serve for receiving the cover (3) are provided on a first side surface (14.11, 14.21), which is aligned in the same direction in the circumferential direction, of the driver elements (11.1, 11.2), and on the opposite side surfaces (14.12), the first driver elements (11.1) are **characterized by** a stop surface (54) for a cutout (17) on the cover (3), and the second driver elements (11.2) are **characterized by** a cutout (16) which is open at the edge and which serves for receiving the connecting ring (4).

9. Driver unit (1) according to Claim 8, **characterized in that** the connecting ring (4) has cutouts (21, 21.1, 21.2, 21.3) which are arranged uniformly in the circumferential direction and which are complementary to the cutouts (17) on the cover (3) and which are larger than the extent of the driver elements (11.1, 11.2) in the circumferential direction but smaller than the sum of the spacing between two driver elements (11.1, 11.2), wherein on the connecting ring (4) there are provided means (22) for realizing a snap-action connection (53), which means come into operative connection with an associated slot (17) on the cover (3).

10. Driver unit (1) according to Claim 9, **characterized in that** the associated slot in the cover (3) is formed by a cutout (17) which is arranged in the circumferential direction and through which driving elements (11.1, 11.2) extend.

11. Driver unit (1) according to one of Claims 6 to 10, **characterized in that** the means (22) for realizing the snap-action connection (53) has at least one spring element (23) which is aligned in the axial direction but acts in the circumferential direction.

12. Driver unit (1) according to one of Claims 3 to 11, **characterized in that** a torque limiting means (25) is formed by a ramp (28) which is formed by a projection which is aligned in the axial direction and which, in the installed position, extends into the passage opening (17) on the cover (3), said projection having a stop surface (29) which is aligned in the circumferential direction and which can be placed in operative connection with a stop surface (19) on the cover (3).

13. Driver unit (1.2) according to one of Claims 1 to 4, **characterized in that** means (30) for realizing positive locking in the circumferential direction are provided between the cover (3, 3.2) and the clutch housing (2, 2.2).

14. Driver unit (1.2) according to Claim 13, **characterized in that** the connecting ring (4.2) is connected to the cover (3.2) for conjoint rotation in the circumferential direction by means of a snap-action connection (55), and the cover (3.2) is clamped to the clutch housing (2.2) in the axial direction by means of positive locking.

15. Driver unit (1.2) according to Claim 14, **characterized in that** the positive locking between the cover (3.2) and the clutch housing (2.2) in the axial direction is formed by means of a bayonet connection (31).

16. Driver unit (1.2) according to one of Claims 13 to 15, **characterized in that** the clutch housing (2.2) has driver elements (33.1, 33.2) which are arranged spaced apart uniformly from one another in the circumferential direction in the region of the outer circumference, wherein driver elements (33.1, 33.2) have different end regions (34.1, 34.2) forming first driver elements (33.1) and second driver elements (33.2), and one set of driver elements (33.2) forms, in the circumferential direction on the side surfaces (35.21, 35.22), in each case one stop surface (39, 40) which interacts with surfaces (42, 43) complementary thereto on a cutout (41) in the cover (3.2), and the other set of driver elements (33.1) has, in the circumferential direction, only a stop surface (37) which acts in the functional direction, whereas on the opposite side surface (35.22) there is provided a cutout (36) for the at least partial insertion of the connecting ring (4.2) for the axial clamping between the cover (3.2) and clutch housing (2).

17. Driver unit (1) according to one of Claims 14 to 16, **characterized in that** the connecting ring (4.2) has means for realizing the snap-action connection (55), which means interact with a slot (46), which is complementary thereto, on the cover (3.2).

18. Driver unit (1, 1.2) according to one of Claims 3 to 17, **characterized in that** the elastic elements are formed by the means for realizing a snap-action connection (53, 55).

19. Driver unit (1, 1.2) according to one of Claims 8 to 18, **characterized in that** the driver elements (11.1, 11.2, 33.1, 33.2), the cutouts (17, 21, 41) on the cover (3) and the connecting ring (4) are arranged on one diameter.

20. Driver unit (1) according to one of Claims 1 to 19, **characterized in that** the driver elements (11.1, 11.2, 33.1, 33.2), the cutouts (17, 21, 41) on the cover (3) and the connecting ring (4) are arranged at different diameters.

21. Driver unit (1) according to one of Claims 1 to 20, **characterized in that** the driver elements (11.1, 11.2, 33.1, 33.2) extend in the axial direction and the connecting ring (4, 4.2) and the cover (3, 3.2) are formed as disc-shaped elements.

## Revendications

1. Unité d'entraînement (1, 1.2) pour des agencements d'embrayage, notamment des agencements de doubles embrayages humides, comprenant un boîtier d'embrayage (2, 2.2) et un couvercle (3, 3.2), qui sont connectés l'un à l'autre en formant un espace interne (I) pour recevoir l'agencement d'embrayage, le couvercle (3, 3.2) étant fixé sur le boîtier d'embrayage (2, 2.2) par le biais d'une bague de connexion (4, 4.2), **caractérisée en ce que** la connexion entre le couvercle (3, 3.2) et le boîtier d'embrayage (2, 2.2) est précontrainte dans la direction périphérique par le biais d'éléments élastiques (23, 45).

2. Unité d'entraînement (1, 1.2) selon la revendication 1, **caractérisée en ce que** le couvercle (3, 3.2) est fixé sur le boîtier d'embrayage (2, 2.2) par le biais de la bague de connexion (4, 4.2) dans la direction axiale et dans la direction périphérique.

3. Unité d'entraînement (1, 1.2) selon l'une quelconque des revendications 1 ou 2, **caractérisée en ce que** la connexion entre le couvercle (3, 3.2) et le boîtier d'embrayage (2. 2.2) par le biais de la bague de connexion (4, 4.2) est solidaire en rotation et est exempte de jeu dans la direction axiale et/ou dans la direction périphérique.

4. Unité d'entraînement (1) selon l'une quelconque des revendications 1 à 3, **caractérisée en ce que** le couvercle (3) et le boîtier d'embrayage (2) peuvent tourner l'un par rapport à l'autre de manière limitée dans la direction périphérique.

5. Unité d'entraînement (1) selon l'une quelconque des revendications 1 à 4, **caractérisée en ce qu'**entre le couvercle (3) et le boîtier d'embrayage (2) sont prévus des moyens pour réaliser (7) un engagement par coopération de forme dans la direction axiale avec jeu, et des moyens (8) pour réaliser une butée dans un sens de rotation dans la direction périphérique.

6. Unité d'entraînement (1) selon la revendication 5, **caractérisée en ce que** la bague de connexion (4) est connectée de manière solidaire en rotation avec le couvercle (3) par le biais d'une connexion par encliquetage (53) dans la direction périphérique et le couvercle (3) est serré avec le boîtier d'embrayage (2) dans la direction axiale par le biais d'un engagement par coopération de forme.

7. Unité d'entraînement (1) selon la revendication 6, **caractérisée en ce que** l'engagement par coopération de forme entre le couvercle (3) et le boîtier d'embrayage (2) dans la direction axiale est formé par une connexion à baïonnette (5).

8. Unité d'entraînement (1) selon l'une quelconque des revendications 5 à 7, **caractérisée en ce que** le boîtier d'embrayage (2) présente des éléments d'entraînement (11.1, 11.2) qui sont disposés dans la région de la périphérie extérieure de manière espacée les uns des autres uniformément dans la direction périphérique, des éléments d'entraînement (11.1, 11.2) présentant différentes régions d'extrémité (13.1, 13.2) en formant des premiers éléments d'entraînement (11.1) et des deuxièmes éléments d'entraînement (11.2), et ceux-ci coopérant avec des évidements (17) complémentaires disposés dans le couvercle (3) et s'étendant dans la direction périphérique, qui sont **caractérisés par** une plus grande étendue dans la direction périphérique que l'étendue des éléments d'entraînement (11.1, 11.2) dans la direction périphérique dans la région d'extrémité (13.1, 13.2), des évidements (15.1, 15.2) ouverts aux bords, s'étendant dans la direction périphérique, pour recevoir le couvercle (3) étant prévus sur une première surface latérale (14.11, 14.21) des éléments d'entraînement (11.1, 11.2) orientée dans la même direction dans la direction périphérique et les premiers éléments d'entraînement (11.1) sur les surfaces latérales opposées (14.12) étant **caractérisés par** une surface de butée (54) pour un évidement (17) sur le couvercle (3), et les deuxièmes éléments d'entraînement (11.2) étant **caractérisés par** un évidement (16) ouvert au bord pour recevoir la bague de connexion (4).

9. Unité d'entraînement (1) selon la revendication 8, **caractérisée en ce que** la bague de connexion (4) présente des évidements (21, 21.1, 21.2, 21.3) disposés uniformément dans la direction périphérique complémentaires des évidements (17) sur le couvercle (3), lesquels sont plus grands que l'étendue des éléments d'entraînement (11.1, 11.2) dans la direction périphérique, mais sont plus petits que la somme de la distance entre deux éléments d'entraînement (11.1, 11.2), des moyens (22) pour réaliser une connexion par encliquetage (53) étant prévus sur la bague de connexion (4), lesquels entrent en liaison fonctionnelle avec une fente associée (17) sur le couvercle (3).

10. Unité d'entraînement (1) selon la revendication 9, **caractérisée en ce que** la fente associée dans le couvercle (3) est formée par un évidement (17) disposé dans la direction périphérique et traversé par des éléments d'entraînement (11.1, 11.2).

11. Unité d'entraînement (1) selon l'une quelconque des revendications 6 à 10, **caractérisée en ce que** les moyens (22) pour réaliser la connexion par encliquetage (53) présentent au moins un élément de ressort (23) qui est orienté dans la direction axiale, mais qui agit dans la direction périphérique.

12. Unité d'entraînement (1) selon l'une quelconque des revendications 3 à 11, **caractérisée en ce qu'**une limitation de couple (25) est formée par une rampe (28) qui est formée par une saillie orientée dans la direction axiale et s'étendant dans la position installée dans l'ouverture de passage (17) sur le couvercle (3), laquelle présente une surface de butée (29) orientée dans la direction périphérique, qui peut être amenée en liaison fonctionnelle avec une surface de butée (19) sur le couvercle (3).

13. Unité d'entraînement (1.2) selon l'une quelconque des revendications 1 à 4, **caractérisée en ce qu'**entre le couvercle (3, 3.2) et le boîtier d'embrayage (2, 2.2) sont prévus des moyens (30) pour réaliser un engagement par coopération de forme dans la direction périphérique.

14. Unité d'entraînement (1.2) selon la revendication 13, **caractérisée en ce que** la bague de connexion (4.2) est connectée au couvercle (3.2) de manière solidaire en rotation dans la direction périphérique par le biais d'une connexion par encliquetage (55), et le couvercle (3.2) est serré avec le boîtier d'embrayage (2.2) dans la direction axiale par le biais d'un engagement par coopération de forme.

15. Unité d'entraînement (1.2) selon la revendication 14, **caractérisée en ce que** l'engagement par coopération de forme entre le couvercle (3.2) et le boîtier d'embrayage (2.2) est formé dans la direction axiale par le biais d'une connexion à baïonnette (31).

16. Unité d'entraînement (1.2) selon l'une quelconque des revendications 13 à 15, **caractérisée en ce que** le boîtier d'embrayage (2.2) présente des éléments d'entraînement (33.1, 33.2) qui sont disposés à distance les uns des autres uniformément dans la direction périphérique dans la région de la périphérie extérieure, des éléments d'entraînement (33.1, 33.2) présentant différentes régions d'extrémité (34.1, 34.2) en formant des premiers éléments d'entraînement (33.1) et des deuxièmes éléments d'entraînement (33.2) et certains (33.2) des éléments d'entraînement formant dans la direction périphérique au niveau des surfaces latérales (35.21, 35.22) à chaque fois une surface de butée (39, 40), qui agit avec des surfaces complémentaires (42, 43) sur un évidement (41) dans le couvercle (3.2), et les autres éléments d'entraînement (33.1) ne présentant dans la direction périphérique qu'une surface de butée (37) agissant dans la direction fonctionnelle, tandis que sur la surface latérale opposée (35.22) est prévu un évidement (36) pour introduire au moins en partie la bague de connexion (4.2) en vue du serrage axial entre le couvercle (3.2) et le boîtier d'embrayage (2).

17. Unité d'entraînement (1) selon l'une quelconque des revendications 14 à 16, **caractérisée en ce que** la bague de connexion (4.2) présente des moyens pour réaliser la connexion par encliquetage (55), lesquels coopèrent avec une fente complémentaire (46) sur le couvercle (3.2).

18. Unité d'entraînement (1, 1.2) selon l'une quelconque des revendications 3 à 17, **caractérisée en ce que** les éléments élastiques sont formés par les moyens pour réaliser une connexion par encliquetage (53, 55).

19. Unité d'entraînement (1, 1.2) selon l'une quelconque des revendications 8 à 18, **caractérisée en ce que** les éléments d'entraînement (11.1, 11.2, 33.1, 33.2), les évidements (17, 21, 41) sur le couvercle (3) et sur la bague de connexion (4) sont disposés sur un diamètre.

20. Unité d'entraînement (1) selon l'une quelconque des revendications 1 à 19, **caractérisée en ce que** les éléments d'entraînement (11.1, 11.2, 33.1, 33.2), les évidements (17, 21, 41) sur le couvercle (3) et la bague de connexion (4) sont disposés sur un diamètre différent.

21. Unité d'entraînement (1) selon l'une quelconque des revendications 1 à 20, **caractérisée en ce que** les éléments d'entraînement (11.1, 11.2, 33.1, 33.2) s'étendent dans la direction axiale et la bague de connexion (4, 4.2) et le couvercle (3, 3.2) sont réalisés sous forme d'éléments en forme de disque.
